# EUROPEAN PATENT SPECIFICATION

(11) **EP 1 993 900 B1**
(45) Date of publication and mention of the grant of the patent: **15.09.2010**
(21) Application number: 06745234.2
(22) Date of filing: 14.03.2006
(51) Int. Cl.: B62M 3/04, B62M 3/00, B62M 3/06

(54) **BICYCLE PEDAL CRANK WITH BIOMECHANIC LEVER VARYING DEVICE FOR**
FAHRRADTRETKURBEL MIT BIOMECHANISCHER HEBELVERSTELLVORRICHTUNG
MANIVELLE DE PÉDALE DE BICYCLETTE AVEC DISPOSITIF DE VARIATION DE BRAS DE LEVIER BIOMÉCANIQUE

(43) Date of publication of application: 26.11.2008
(73) Proprietor: Siligardi, Giorgio, 41056 Savignano sul Panaro, Modena (IT)
(72) Inventor: Siligardi, Giorgio, 41056 Savignano sul Panaro, Modena (IT)
(74) Representative: Marcio', Paola
(86) International application number: PCT/IT2006/000153
(87) International publication number: WO 2007/105237

(56) References cited:
- BE-A4- 1 012 289
- DE-C- 114 144
- DE-C- 828 807
- FR-A- 965 381
- FR-A- 1 056 870
- FR-A- 2 579 554
- FR-A- 2 623 769
- FR-A- 2 782 546
- GB-A- 2 002 089
- US-A- 4 411 169

## Description

The present invention concerns a biomechanic lever variator device in bicycle pedal cranks, comprising round cone and central axis connections, with the completion of integral rims that may be screwed onto the right pedal crank, and of an improved frame comprising a box for the central axis having a dimension from 52 to 65 mm, that may be used as a front gear change.

Many patent applications are known having the aim of extending the pedal crank lever only in the active period of biking and to reduce the same in its inactive phase, for increasing the speed with the same energy utilized.

FR-A-2 623 769 discloses a bicycle pedal crank assembly comprising a crank axle, a pedal shaft, an eccentric axle having a first end and a second end and a pedal crank having a first end portion for coupling to the crank axle and a second end portion for coupling to the pedal shaft.

It is the aim of the present invention to allow the bicycle to obtain a higher speed with the same energy employed.

The aim set forth is reached by means of a biomechanic lever device according to claim 1. Further preferred embodiments of the invention are characterized in the remaining claims.

The present invention will be explained more in detail hereinbelow relating to the enclosed drawings, in which some embodiments are shown.

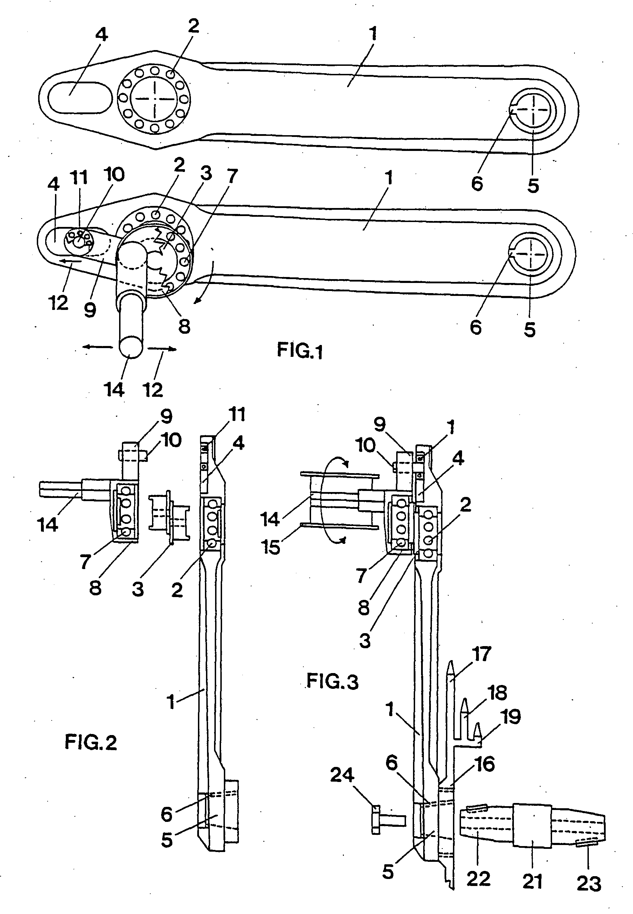

Figure 1 shows a lateral scheme of a not assembled pedal crank according to the present invention, without the remaining parts of the lever variator, while the other pedal crank is assembled with the biomechanic lever variator, pointing out the elongation movements of the lever along the pedal's axis during the active push on the pedal, in front horizontal position.
Figure 2 shows an exploded view of the lever variator with the pedal's axis in the connecting rod, eccentric axis and pedal crank, round cone connection and housing for the key.
Figure 3 shows a vertical profile of the right pedal crank with the assembled lever variator; furthermore, the position of the pedal's axis is shown as well as the conventional pedal that may be replaced with different pedals or with one's own pedal, integral rims, round cone connections with key in pedal crank, and central axis with assembling bolt.

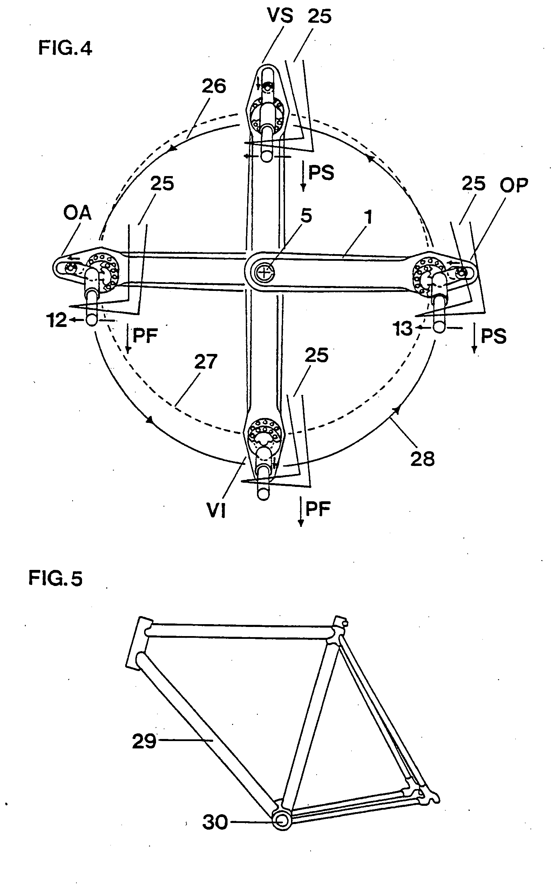

Figure 4 shows the functioning of the biomechanic lever variator in the pedal crank, coupled with the forced and static weight of the biker; different radius' are pointed out during the push on the pedal in an elliptical circumference and in a conventional, round one.
Figure 5 shows a lateral view of the improved frame for a bicycle according to the present invention, with the box for the central axis.

The enclosed figures show the biomechanic lever variator device according to the present invention for bicycles, with round cone connections and a seat for and with key in pedal cranks, and a central axis, integral rims and an improved bicycle frame, comprising:
- a pair of pedal cranks 1 for a bearing 2 for he connection of a central axis 3 with a longitudinal seat 4, and round cone connections 5 with a seat 6 for a key;
- an eccentric axis 3 for the advancement and return movement of a connecting rod 8, assembled in a bearing 7 of said connecting rod 8, in which an arm 9 is provided with a pin 10 fixed at the end and inserted into a bearing 11 for a frontward and backward rotating movement 12 and 13, with the axis of a pedal 14 by means of said longitudinal seat 4 and resting in said pedal cranks 1;
- a conventional pedal 15, assembled for exemplifying reasons in the axis for pedal 14, that may be replaced with different conventional pedals or that may be realized as one's own pedal according to the different kinds of bicycles;
- integral rims 16, or single rims 17 or double rims 18 or triple rims 19, that may be screwed in a right pedal crank 20, for giving more lightness with a greater radial stiffness of said integral rims 16;
- a central axis 21 for said pedal cranks 1, to be used with bearings, with round cone connections 22 and a seat for and with a key 23 for getting fixed into said pedal cranks 1 with a pair of bolts 24, provided with an axis having a greater diameter for giving a greater radial stiffness to said rims 16, and at the same time making the realization easier using light alloys.

The biomechanical component of the lever variator device in bicycle pedal cranks according to the present invention is obtained with the weight of the foot and the movement of the limbs of a biker 25 with a forced weight PF in the active push on the pedal and static weight PS in the inactive return, keeping the eccentric axis 3 in a vertical, downward position, clockwise rotating with said bearing 7 in said connecting rod 8, moving front and back with said pin 10 in said bearing 11 with and in the longitudinal seat 4 of said pedal crank 1, thus determining a movement similar to the one of the connection rod of a combustion engine and consequently, a front and back movement of said pedal 15 assembled in the axis for said pedal 14 that becomes the variable lever point, so that the push on the pedal starts with said pedal crank1 in an upper vertical position VS with a radius 26 smaller than the known radius 27, and gradually increases the length of the lever in a front horizontal position OA for reaching the greatest length in the lower vertical position VI for becoming shorter again in a back horizontal position OP and getting back to a short lever in the vertical upper passage VS with an rotation 28 elliptical with respect to the round cone connection 5 of said pedal crank 1 and at the same time a round rotation, like the known rotation 27.

The functionality of the device according to the present invention is made complete by the presence of an improved bicycle frame 29 for recovering the axial interposed measure occupied by said connection rod 8 with respect to the conventional axis of the pedal, directly in said pedal crank; for the use of the front gear change, said frame comprises a box 30 for the central axis 21, provided with axial dimensione from 52 to 65 mm for the different kinds of bicycles.

In a first, possible variant of the device according to the present invention, elements 2, 3, 4, 5 ,6, 7, 8, 9, 10, 11, 12 and 14 are unvaried as well as the movement of the connection rod, with a movement of the resting point with said pin 10 and said bearing 11 rotating always in said longitudinal seat 4, placed opposite to said arm 9, with a tail, which together form said connection rod 8 thus determining a different lever variable in the connection of each pedal or in the axis of said pedal 14 through a clockwise rotation in said eccentric axis 3, with said tail resting in said longitudinal seat 4, moved from the linear centre of said pedal crank 1.

A further variant comprises the movement of said longitudinal seat 4 from the central, longitudinal and end line of said pedal crank 1, the movement of said axis of any kind of pedal 14 to the outside of said arm 9 with respect to the movement to the inside of the resting point with said pin 10 and the bearing 11 for rotating in the longitudinal seat 4, so that the weight of the foot onto the axis of the pedal induces to anti-clockwise rotation of said eccentric 3 for obtaining a different variable lever.

In the end, the last variant provides an eccentric to be integrated in what above described.

## Claims

1. A biomechanic lever device for bicycles comprising:
- a crank axle comprising a centre portion (21) and first and second free end portions, each of said free end portions being provided with round cone connections (22) having a key (23) for connecting to a pair of pedal cranks;
- a pair of pedal cranks (1, 1), each having a first end portion and a second end portion,
the first end portion being provided with
- a round cone connection (5) adapted to receive the round cone connection (22) of the respective free end portion of the central shaft (21).
- a seat (6) for receiving the key (23) and
the second end portion being provided with a longitudinal seat (4), a first bearing (2) and connecting means, the connecting means are coupling the first bearing (2) to a first side of a shaft structure, the longitudinal axis of a second side of said shaft structure is offset relative to the longitudinal axis of the first side to form an eccentric axle (3),
the second side of the eccentric axle (3) is coupled to a second bearing (7) of a connecting rod (8), the connecting rod (8) comprising a pedal shaft (14) coupled to a pedal (15) and an arm (9) provided with a pin (10), said pin (10) being fixed at a free end of the arm (9) and said pin (10) being inserted in a third bearing (11), which is slidably guided in said longitudinal seat (4) of the
respective pedal crank,
a sprocket carrier is integrally formed at the first end portion of one of said pedal cranks for being coupled to a sprocket cluster.

2. A biomechanic lever device according to claim 1, **characterized in that** the longitudinal seat (4), the first bearing (2) and the round cone connection (5) align with the longitudinal direction of the respective pedal crank and the first bearing (2) is disposed between the longitudinal seat (4) and the round cone connection (5).

3. A biomechanic lever device according to claims 1 or 2, **characterized in that** the diameter of the crank axle is maximum at its centre portion (21).

4. A biomechanic lever device according to one of preceding claims, **characterized in that** each connecting rod (8) is provided with a hole for receiving the second bearing (7).

## Patentansprüche

1. Biomechanische Hebelvorrichtung für Fahrräder bestehend aus:
- einer Kurbelachse bestehend aus einem mittleren Abschnitt (21) und einem ersten und zweiten Abschnitt mit freiem Ende, wobei jeder dieser Abschnitte mit freiem Ende mit runden Kegelbefestigungen (22) ausgerüstet ist, die einen Schlüssel (23) zum Aufstecken an ein Paar Tretkurbeln haben;
- einem paar Tretkurbeln (1, 1), die jeweils einen ersten Endabschnitt und einen zweiten Endabschnitt haben,
wobei der erste Endabschnitt ausgerüstet ist mit
- einer runden Kegelbefestigung (5) zum Aufnehmen der runden Kegelbefestigung (22) des entsprechenden freien Endabschnittes der mittleren Welle (21),
- einem Auflager (6) zum Aufnehmen des Schlüssels (23) und der zweite Endabschnitt mit einem Längsauflager (4), einem ersten Lager (2) und Befestigungsmitteln ausgerüstet ist, wobei die Befestigungsmitteln das erste Lager (2) an eine erste Seite der genannten Wellenstruktur ankoppeln, die Längsachse einer zweiten Seite der genannten Wellenstruktur zur Längsachse der ersten Seite versetzt ist und eine exzentrische Achse (3) bildet,
die zweite Seite der exzentrischen Achse (3) an das zweite Lager (7) eines Verbindungsstabes (8) angekoppelt ist, wobei der Verbindungsstab (8) eine an ein Fußpedal (15) angekoppelte Tretwelle (14) und einen mit einem Stift (10) versehenen Arm (9) umfasst, wobei genannter Stift (10) an einem freien Ende des Armes (9) befestigt ist und genannter Stift (10) in das dritte Lager (11) eingesetzt ist, das in genanntem Längsauflager (4) der entsprechenden Tretkurbel gleitet, ein Kettenradträger am ersten Endabschnitt von einer der genannten Tretkurbeln in einem Stück befestigt ist, um an eine Kettenradgruppe angekoppelt zu werden.

2. Biomechanische Hebelvorrichtung nach Anspruch 1, **dadurch gekennzeichnet, dass** das Längsauflager (4), das erste Lager (2) und die runde Kegelbefestigung (5) in Längsrichtung der entsprechende Tretkurbel axial ausgerichtet sind und das erste Lager (2) zwischen dem Längsauflager (4) und der runden Kegelbefestigung (5) angeordnet ist.

3. Biomechanische Hebelvorrichtung nach Anspruch 1 oder 2, **dadurch gekennzeichnet, dass** der Durchmesser der Kurbelachse höchstens ihrem mittleren Abschnitt (21) entspricht.

4. Biomechanische Hebelvorrichtung nach einem der vorstehenden Ansprüche, **dadurch gekennzeichnet, dass** jeder Verbindungsstab (8) mit einer Bohrung zum Aufnehmen des zweiten Lagers (7) ausgerüstet ist.

## Revendications

1. Un dispositif de levier biomécanique pour vélos comprenant :
- un axe de manivelle comprenant une portion centrale (21) et une première et deuxième portions d'extrémité libres, chacune desdites portions d'extrémité libres étant dotée de connexion à cône arrondi (22) ayant une clavette (23) pour le raccordement d'une paire de manivelles de pédale ;
- une paire de manivelles de pédale (1, 1) ayant chacune une première portion d'extrémité et une deuxième portion d'extrémité,
la première portion d'extrémité étant dotée de
- une connexion à cône arrondi (5) adaptée pour recevoir la connexion à cône arrondi (22) de la portion d'extrémité libre respective de l'arbre central (21),
- un siège (6) pour recevoir la clavette (23) et
la deuxième portion d'extrémité étant dotée d'un siège longitudinal (4), un premier palier (2) et un dispositif de connexion, le dispositif de connexion accouplant le premier palier (2) à un premier côté d'une structure d'arbre, l'axe longitudinal d'un deuxième côté de ladite structure d'arbre est en décalage par rapport à l'axe longitudinal dudit premier côté pour former un axe excentrique (3),
le deuxième côté de l'axe excentrique (3) est accouplé à un deuxième palier (7) d'une tige de connexion (8), la tige de connexion (8) comprenant un arbre de pédale (14) accouplé à une pédale (15) et un bras (9) doté d'une goupille (10), ladite goupille (10) étant fixée à l'extrémité libre du bras (9) et ladite goupille (10) étant introduite dans un troisième palier (11), guidé par coulissement dans ledit siège longitudinal (4) de la manivelle de pédale respective,
un support de pignon est intégralement formé à la première portion d'extrémité de l'une desdites manivelles de pédale pour être couplé à un groupe de pignons.

2. Un dispositif de levier biomécanique selon la revendication 1, **caractérisé par le fait que** le siège longitudinal (4), le premier palier (2) et la connexion à cône arrondi (5) s'alignent avec la direction longitudinale de la manivelle de pédale respective et que le premier palier (2) est disposé entre le siège longitudinal (4) et la connexion à cône arrondi (5).

3. Un dispositif de levier biomécanique selon la revendication 1 ou 2, **caractérisé par le fait que** le diamètre de l'axe de la manivelle est maximum à sa portion centrale (21).

4. Un dispositif de levier biomécanique selon l'une des revendications précédentes, **caractérisé par le fait que** chaque tige de connexion (8) est dotée d'un trou pour recevoir le deuxième palier (7).
